# EUROPÄISCHE PATENTSCHRIFT

(11) **EP 1 455 119 B1**
(45) Veröffentlichungstag und Bekanntmachung des Hinweises auf die Patenterteilung: **28.12.2011**
(21) Anmeldenummer: 04005456.1
(22) Anmeldetag: 08.03.2004
(51) Int. Cl.: B60W 30/18, B60W 10/10, B60W 10/30

(54) **Fahrzeug mit hydrostatischem Getriebe**
Vehicle with hydrostatic transmission
Véhicule à transmission hydrostatique

(30) Priorität: 07.03.2003 DE 10310980
(43) Veröffentlichungstag der Anmeldung: 08.09.2004
(73) Patentinhaber: Holder Industries GmbH, 72555 Metzingen (DE)
(72) Erfinder: Braun, Fritz, 72127 Kusterdingen (DE); Bauer, Andreas, 72581 Dettingen (DE)
(74) Vertreter: Hoeger, Stellrecht & Partner Patentanwälte

(56) Entgegenhaltungen:
- EP-A1- 0 408 170
- EP-A1- 0 967 107
- EP-A2- 1 052 388
- DE-A1- 2 362 221
- DE-A1- 4 111 921

## Beschreibung

Die Erfindung betrifft ein Fahrzeug, insbesondere Zugfahrzeug oder Fahrzeug mit Nebenabtrieb, umfassend einen Verbrennungsmotor, mindestens eine von dem Verbrennungsmotor angetriebene Hydraulikpumpe mit steuerbarem Fördervolumen, mindestens einen Hydromotor, welcher von der Hydraulikpumpe angetrieben ist, wobei ein Hydromotor ein oder mehrere Antriebselemente des Fahrzeugs antreibt, ein vom Fahrer betätigbares Fahrpedal zur Einstellung der Drehzahl des Verbrennungsmotors in einem Straßenfahrt-Modus und eine vom Fahrer betätigbare erste Stelleinrichtung zur Steuerung des Fördervolumens der Hydraulikpumpe in einem Arbeits-Modus.

Ein entsprechendes Fahrzeug ist beispielsweise aus der DE 41 11 921 A1 bekannt. Das Dokument DE 41 11 921 A1 bildet auch den nächstligender Stand der Technik.

Ein solches Fahrzeug läßt sich in einem Straßenfahrt-Modus in der Art eines konventionellen Fahrzeugs mit Automatikgetriebe steuern, wobei die Geschwindigkeit über das Fahrpedal als Gaspedal geregelt wird. In dem Arbeits-Modus erfolgt die Geschwindigkeitssteuerung über Steuerung des Fördervolumens der Hydraulikpumpe (bei fest eingestellter Solldrehzahl des Verbrennungsmotors), wobei die Geschwindigkeit über die erste Stelleinrichtung, welche insbesondere handbetätigbar ist, auch fest einstellbar ist.

Der Erfindung liegt die Aufgabe zugrunde, das eingangs genannte Fahrzeug derart zu verbessern, daß es umfangreiche Steuerungsmöglichkeiten aufweist.

Diese Aufgabe wird bei dem eingangs genannten Fahrzeug erfindungsgemäß dadurch gelöst, daß eine zweite Stelleinrichtung an das Fahrpedal gekoppelt und über das Fahrpedal betätigbar ist, und mit der im Arbeits-Modus das Fördervolumen der Hydraulikpumpe steuerbar ist.

In dem Arbeits-Modus hat dann ein Fahrer die Möglichkeit, die Geschwindigkeit des Fahrzeugs (welche über das Fördervolumen der Hydraulikpumpe eingestellt ist), entweder über die erste Stelleinrichtung oder über die zweite Stelleinrichtung zu steuern. Bei der ersten Stelleinrichtung handelt es sich beispielsweise um ein Potentiometer, bei dem eine bestimmte Winkelstellung ein bestimmtes Fördervolumen bedeutet. Insbesondere bleibt die Stellung des Potentiometers nach der Einstellung erhalten, das heißt es ist eine explizite Betätigung (mit "Kraftaufwand") notwendig, um einen eingestellten Zustand zu verändern.

Es kann aber auch vorteilhaft sein, wenn für einen Fahrer die Möglichkeit vorgesehen ist, im Arbeits-Modus die Geschwindigkeit über das Fahrpedal zu steuern, wobei ein Kraftaufwand notwendig ist, um eine eingestellte Stellung zu halten; wird beispielsweise das Fahrpedal ausgehend von einer bestimmten Stellung entlastet oder stärker belastet, dann ändert sich die Geschwindigkeit. Das Fahrpedal wirkt dabei nicht als Gaspedal, sondern als Stellelement für das Fördervolumen einer Hydraulikpumpe.

Es ist beispielsweise bei fahrbaren Mähern üblich, daß während des Mähbetriebs als Arbeits-Modus ein Fahrer ständig das Fußpedal belasten muß. Um solchen Fahrern einen leichten Umstieg zu erlauben, kann eine Geschwindigkeitssteuerung über das Fußpedal auch im Arbeits-Modus, bei dem eine Steuerung über das Fördervolumen der Hydraulikpumpe erfolgt, eingestellt werden. Beim Umstieg von einem entsprechenden Mäher auf das erfindungsgemäße Fahrzeug braucht sich dann der Fahrer nicht umzugewöhnen.

Durch die Geschwindigkeitssteuerung über ein fußbetätigbares Fahrpedal ist entsprechend auch eine Hand des Fahrers entlastet. Dies kann vorteilhaft sein, wenn viele Richtungswechsel vorgenommen werden müssen, so daß beide Hände für die Richtungssteuerung (Steuerrad und Fahrtrichtungswechsel) benötigt werden.

Darüber hinaus hat man bei der Geschwindigkeitssteuerung über das Fahrpedal im Arbeits-Modus auch eine erhöhte Sicherheit: wird das Pedal losgelassen, dann wird das Fahrzeug langsamer und hält schließlich an.

Insbesondere ist ein Schalter vorgesehen, mit dem vom Fahrer entweder die erste Stelleinrichtung oder die zweite Stelleinrichtung zur Steuerung des Fördervolumens der Hydraulikpumpe im Arbeits-Modus aktivierbar ist. Ein Fahrer kann dann je nach seinen Gewohnheiten selber einstellen, ob er eine Fahrpedal-Bedienung während des Arbeits-Modus wünscht oder ob er eine Festeinstellung insbesondere über ein handbetätigbares Potentiometer wünscht.

Insbesondere umfaßt die erste Stelleinrichtung ein Potentiometer, mit dem ein bestimmtes Fördervolumen einstellbar ist, beispielsweise über eine bestimmte Winkelstellung. Diese Winkelstellung bleibt erhalten.

Es kann auch vorgesehen sein, daß die zweite Stelleinrichtung ein über das Fahrpedal betätigbares Potentiometer umfaßt, wobei die Fahrpedalstellung die Potentiometerstellung steuert. Üblicherweise sind Fahrpedale derart ausgebildet, daß sie bei Entlastung in eine Ausgangsstellung zurückgehen. Bei Loslassen des Fahrpedals reduziert sich daher das Fördervolumen.

Insbesondere ist im Arbeits-Modus das Fördervolumen der Hydraulikpumpe proportional zur Stellung der aktivierten Stelleinrichtung eingestellt. In Abhängigkeit der Stellung der Stelleinrichtung erhält man dann eine proportionale Geschwindigkeit.

Es ist vorgesehen, daß im Arbeits-Modus eine Motordrehzahl des Verbrennungsmotors fest eingestellt ist, so daß dieser insbesondere für einen Nebenabtrieb in einem optimalen Drehzahlbereich arbeitet.

Zur Ausbildung einer Grenzlastregelung kann es vorgesehen sein, daß die zweite Stelleinrichtung an eine Steuerung gekoppelt ist, welche Antrieb des Fahrzeugs steuert und/oder regelt. Falls eine bestimmte Soll-Motordrehzahl unterschritten wird, läßt sich dadurch die zweite Stelleinrichtung entsprechend beeinflussen.

Die zweite Stelleinrichtung ist dann vorteilhaft über eine Grenzlastregelung für den Verbrennungsmotor deaktivierbar, wenn sich ergibt, daß der Verbrennungsmotor außerhalb eines Toleranzbereiches um eine Soll-Motordrehzahl betrieben werden muß.

Insbesondere ist bei einer Motordrehzahl des Verbrennungsmotors unterhalb einer Anfahrdrehzahl die zweite Stelleinrichtung deaktiviert. Dadurch läßt sich eine zu starke Belastung des Motors beim Anfahren verhindern.

Es kann auch vorteilhaft sein, wenn bei Erreichen einer Stellung der zweiten Stelleinrichtung, welche einem Fördervolumen unterhalb eines Knickpunkts der Hydraulikpumpe entspricht, die zweite Stelleinrichtung deaktiviert ist. Der Knickpunkt liegt beispielsweise bei ca. 20 % des maximalen Fördervolumens. Unterhalb des Knickpunkts kann der Verbrennungsmotor zu stark belastet sein, so daß hier die zweite Stelleinrichtung deaktiviert wird, um ein weiteres Abfallen des Fördervolumens zu verhindern.

In dem Straßenfahrt-Modus sind die erste Stelleinrichtung und die zweite Stelleinrichtung deaktiviert, so daß hier eine Geschwindigkeitsregelung über das Fahrpedal in der Art eines konventionellen Fahrzeugs mit Gaspedal und mit Automatikgetriebe erfolgen kann, wobei die Drehzahl des Verbrennungsmotors über das Fahrpedal verstellt wird. Vorzugsweise erfolgt die Aktivierung und Deaktivierung der Stelleinrichtung beim Übergang in den Arbeits-Modus oder beim Verlassen des Arbeits-Modus automatisch, wobei im Arbeits-Modus der Fahrer die Wahlmöglichkeit hat, entweder die erste oder die zweite Stelleinrichtung zu aktivieren. Es können auch Untermoden des Arbeits-Modus vorgesehen sein, welche bezüglich der Steuerung des Fahrzeugs identisch sind, nur daß im einen Fall die erste Stelleinrichtung und im anderen Fall die zweite Stelleinrichtung aktiviert ist.

Die nachfolgende Beschreibung einer bevorzugten Ausführungsform dient im Zusammenhang mit der Zeichnung der näheren Erläuterung der Erfindung. Es zeigen:
- Figur 1: eine Seitenansicht eines Ausführungsbeispiels eines erfindungsgemäßen Fahrzeugs (in diesem Fall eines Kommunalfahrzeugs mit Nebenabtrieben);
- Figur 2: eine Draufsicht auf das Fahrzeug gemäß Figur 1 mit offenem Dach, und
- Figur 3: schematisch ein Ausführungsbeispiel eines Hydraulik- und Steuerungsschemas.

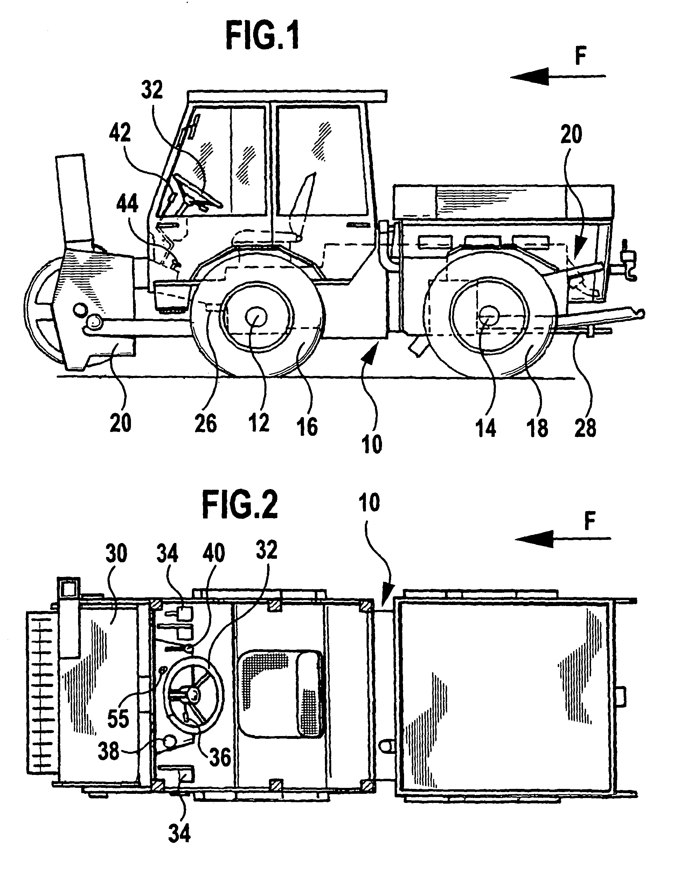

Ein Ausführungsbeispiel eines erfindungsgemäßen Fahrzeugs, welches in Figur 1 gezeigt ist, umfaßt ein Fahrgestell 10 mit einer Vorderachse 12 und einer Hinterachse 14. Die Vorderachse ist mit vorderen Rädern 16 und die Hinterachse mit hinteren Rädern 18 versehen.

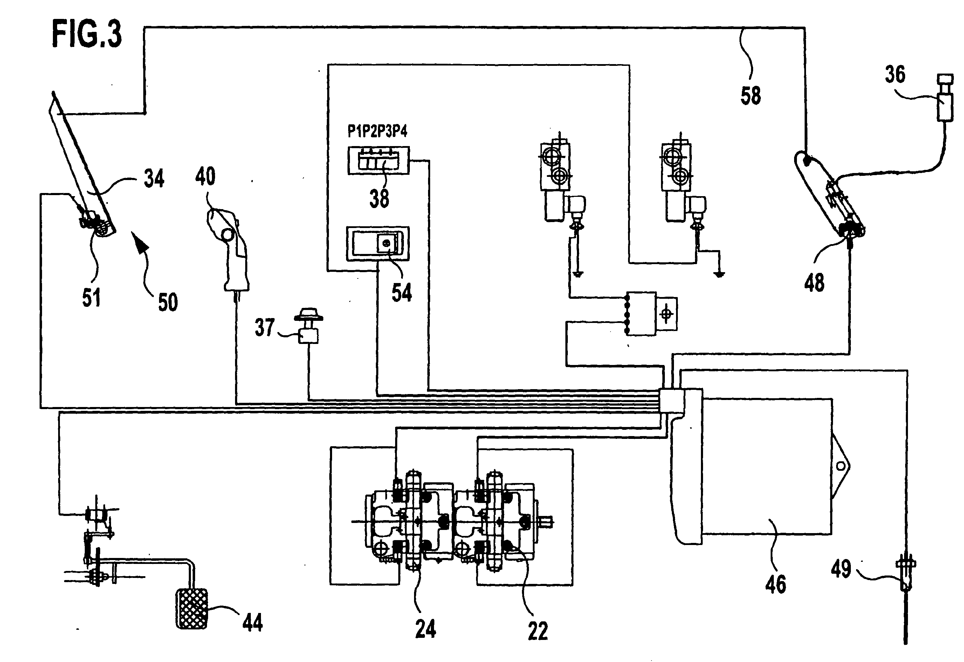

Zum Antrieb des Fahrzeugs dient ein Verbrennungsmotor 20 wie beispielsweise ein Dieselmotor, welcher eine Hydraulikpumpe treibt. Es kann dabei für die Vorderachse 12 eine erste Hydraulikpumpe 22 und für die Hinterachse 14 eine zweite Hydraulikpumpe 24 vorgesehen sein (Figur 3) oder auch nur eine einzige Hydraulikpumpe.

Die Hydraulikpumpen 22 und 24 treiben einen Hydromotor (oder mehrere Hydromotoren) an (in der Zeichnung nicht gezeigt), welcher beispielsweise ein mechanisches Getriebe mit Antriebselementen antreibt, über welches entsprechend die Vorderachse 12 und die Hinterachse 14 antreibbar sind. Es können auch Radmotoren als Hydromotoren vorgesehen sein, welche die Räder 16, 18 direkt antreiben.

Es kann vorgesehen sein, daß der Verbrennungsmotor 20 auch einen vorderen Nebenabtrieb 26 und eine hinteren Nebenabtrieb 28 antreibt. Diese Nebenabtriebe 26, 28 sind über eine Nebenabtriebskupplung direkt an den Verbrennungsmotor 20 ankoppelbar.

An dem Fahrgestell 10 des Fahrzeugs lassen sich Zusatzgeräte montieren, die entweder über den vorderen Nebenabtrieb 26 oder den hinteren Nebenabtrieb 28 antreibbar sind. Bei dem in den Figuren 1 und 2 gezeigten Fahrzeug ist eine Schneefräse 30 an einer Vorderseite des Fahrgestells 10 montiert und über den vorderen Nebenabtrieb 26 angetrieben.

Alternativ zu der Schneefräse 30 ist es auch beispielsweise möglich, an einer Vorderseite oder einer Hinterseite des Fahrgestells 10 eine Mäheinrichtung zu montieren und über den jeweiligen Nebenabtrieb 26 bzw. 28 anzutreiben.

Das Fahrzeug wird konventionell über ein Lenkrad 32 gelenkt. Der Verbrennungsmotor wird über ein Fahrpedal 34 und insbesondere Fußpedal gesteuert. Das Fahrpedal 34 wirkt dabei dann als Gaspedal. Ferner ist ein Handgashebel 36 vorgesehen, über welchen der Verbrennungsmotor 20 entsprechend steuerbar ist, das heißt die Motordrehzahl den entsprechenden Anforderungen, insbesondere eines Zusatzgeräts, anpaßbar ist.

Die einzelnen Fahrzustände des Fahrzeugs sind von dem Fahrer über einen Programmwahlschalter 38 einstellbar, über den bestimmte Fahrmoden einstellbar sind. Zur Wahl der Fahrtrichtung und insbesondere zum Umschalten zwischen Vorwärtsfahrt und Rückwärtsfahrt ist ein Fahrtrichtungsvorwahlhebel 40 vorgesehen. Es kann auch anstatt dieses Fahrtrichtungsvorwahlhebels 40 ein zusätzlicher Kippschalter an dem Programmwahlschalter 38 vorgesehen sein, so daß in jedem Fahrtmodus zwischen Vorwärtsfahrt und Rückwärtsfahrt (und Null-Stellung) umschaltbar ist.

Ferner ist ein Rückstellpedal 44 (Inchpedal) vorgesehen.

Ein solches Fahrzeug ist in der DE 41 11 921 A1 beschrieben, auf die hiermit ausdrücklich Bezug genommen wird.

Das erfindungsgemäße Fahrzeug umfaßt eine elektronische Steuerung 46 (Figur 3), welche einen Prozeßrechner und einen programmierbaren Speicher aufweist, wobei die Steuerung 46 mit einem Stellungsgeber verbunden ist, welcher die jeweilige Stellung einer Stelleinrichtung zur Steuerung des Fördervolumens der Hydraulikpumpe detektiert und der Steuerung einen Maximalparameter übermittelt. Die Steuerung steuert entsprechend einem in dem Speicher abgelegten Programm und dem übermittelten Maximalparameter das Fördervolumen der Hydraulikpumpe. Eine entsprechende Steuerung ist ebenfalls in der DE 41 11 921 A1 beschrieben, auf die vollinhaltlich Bezug genommen wird.

Ein Drehzahlmesser 49 ermittelt den Ist-Wert der Drehzahl des Verbrennungsmotors und liefert diesen Wert an die Steuerung 46.

Es sind beispielsweise vier Fahrmoden P1, P2, P3 und P4 vorgesehen, wobei der jeweilige Fahrmodus mit dem Programmwahlschalter 38 einstellbar ist. In den Programmmoden P1 und P2, welche Straßenfahrt-Moden sind (P1 für schnelle Straßenfahrt und P2 für langsame Straßenfahrt) erfolgt beispielsweise die Geschwindigkeitssteuerung über das Fahrpedal 34 als Gaspedal. Das Fahrpedal 34 bildet dadurch eine erste Stelleinrichtung, mit der der Verbrennungsmotor 20 steuerbar ist.

Über das Fahrpedal 34 läßt sich die Motordrehzahl des Verbrennungsmotors 20 und gegebenenfalls zusätzlich das Fördervolumen der Hydraulikpumpe bzw. Hydraulikpumpen 22, 24 verstellen. In den entsprechenden Betriebsmoden P1, P2 beginnt beispielsweise dann die Hydraulikpumpe 22 bzw. 24 auszuschwenken, das heißt den zugeordneten Hydromotor anzutreiben, wenn eine bestimmte Anfahrdrehzahl als Drehzahl des Verbrennungsmotors 20 bzw. ein bestimmter Anfahrpunkt über die Position des Fußpedals 34 erreicht ist. Bei Erreichen eines bestimmten Knickpunkts, der dadurch definiert ist, daß die Hydraulikpumpe 22 bzw. 24 ein bestimmtes Fördervolumen erreicht, wird dafür gesorgt, daß das Fördervolumen der Pumpe bis auf das maximale Fördervolumen erhöhbar ist. Der Knickpunkt liegt je nach Programm beispielsweise bei ca. 20 % des Fördervolumens in Bezug auf das maximale Fördervolumen. Durch eine solche Steuerung bzw. Regelung über einen Knickpunkt kann die Auflösung des Fahrpedals 34 beim Anfahren erhöht werden, um so eine genauere Steuerung der Anfahrbewegung des Fahrzeugs zu erhalten.

Bei Erreichen einer Enddrehzahl ist für die Hydraulikpumpe 22 bzw. 24 das maximale Fördervolumen erreicht. Eine höhere Geschwindigkeit ist anschließend nur noch über eine Drehzahlerhöhung des Verbrennungsmotors erreichbar.

In dem Programmmodus P1 und P2 läßt sich das Fahrzeug in der Art eines konventionellen Fahrzeugs mit automatischem Getriebe betreiben, wobei das Rückstellpedal 44 (Inchpedal) als Bremse und Kupplung wirkt und das Fahrpedal 34 als Gaspedal.

In einem Arbeits-Modus P3 ist die Geschwindigkeit des Fahrzeugs alleine über das Fördervolumen der Hydraulikpumpe 22 bzw. 24 gesteuert. Dazu wird über den Handgashebel 36 eine Soll-Motordrehzahl insbesondere für das über den Nebenabtrieb 26 oder 28 angetriebene Zusatzgerät über den Handgashebel 36 eingestellt. Ein Motordrehzahlpotentiometer 48 wird entsprechend verstellt, so daß der Sollwert an die Steuerung 46 übermittelbar ist.

Die Geschwindigkeit des Fahrzeugs wird dann über ein beispielsweise handbetätigbares Potentiometer 37 eingestellt. Mittels dieses Potentiometers 37 ist eine erste Stelleinrichtung gebildet, über die im Arbeits-Modus P3 das Fördervolumen der Hydraulikpumpe 22 bzw. 24 steuerbar ist. Insbesondere ist eine Proportionalsteuerung vorgesehen, bei der das Fördervolumen proportional zu der Stellung und insbesondere Drehstellung des Handgashebels erfolgt.

Um eine Grenzlastregelung für den Verbrennungsmotor 20 durchführen zu können, vergleicht die Steuerung 46 den Ist-Wert der Motordrehzahl (gemessen über den Drehzahlsensor 49) mit dem Sollwert. Ist die Motordrehzahl des Verbrennungsmotors 20 kleiner als eine dem Knickpunkt entsprechende Drehzahl, dann wird die Steuerung des Fördervolumens der Hydraulikpumpe 22 bzw. 24 über die erste Stelleinrichtung 36 gesperrt. Ist entsprechend das Potentiometer 37 in einer Stellung, welcher einem Fördervolumen unterhalb des Knickpunkts entspricht, dann wird die Steuerung über dieses Potentiometer 37 gesperrt. Fällt während der Steuerung die Motordrehzahl unter eine Soll-Anfahrdrehzahl bzw. wird die erste Stelleinrichtung in eine solche Stellung gebracht, daß das Fördervolumen der Hydraulikpumpe 22 bzw. 24 unter den Knickpunkt fällt, dann wird die erste Stelleinrichtung ebenfalls gesperrt. In den genannten Fällen ist es vorteilhafter, im Programmmodus P1 bzw. P2 zu fahren, bei der die Geschwindigkeit über das Fußpedal 34 in der Art eines konventionellen Automatikantriebs gesteuert wird.

Erfindungsgemäß ist nun eine zweite Stelleinrichtung 50 vorgesehen, welche über einen Schalter und insbesondere den Programmwahlschalter 38 (Figur 2) im Arbeits-Modus P4 aktivierbar ist. Der Arbeits-Modus P4 entspricht bezüglich der Antriebssteuerung des Fahrzeugs dem Arbeits-Modus P3, nur daß die Steuerung des Fördervolumens der Hydraulikpumpe über die zweite Stelleinrichtung 50 statt über die erste Stelleinrichtung 37 erfolgt. Ein Fahrer kann für den Arbeits-Modus entscheiden, ob er die Geschwindigkeitssteuerung mittels der ersten Stelleinrichtung mit Potentiometer 37 oder der zweiten Stelleinrichtung 50 durchführen möchte. Über die zweite Stelleinrichtung 50 läßt sich das Fördervolumen der Hydraulikpumpe 22 bzw. 24 bei fest eingestellter Solldrehzahl des Verbrennungsmotors 20 steuern. Sie umfaßt dazu ein Potentiometer 51, welches an das Fahrpedal 34 gekoppelt ist.

Erfindungsgemäß ist es nun vorgesehen, daß die zweite Stelleinrichtung 50 derart an das Fahrpedal 34 gekoppelt ist, daß sich durch Betätigung/Loslassen des Fahrpedals 34 bei aktivierter zweiter Stelleinrichtung 50 die Geschwindigkeit des Fahrzeugs über die Steuerung des Fördervolumens steuern läßt.

Der Fahrer muß dabei, um ein bestimmtes Fördervolumen (entsprechend einer bestimmten Geschwindigkeit) zu halten, sofern die zweite Stelleinrichtung 50 aktiviert ist, seinen Fuß auf dem Fahrpedal 34 belassen. Durch weiteres Niederdrücken kann er eine höhere Geschwindigkeit erreichen. Alternativ ist es möglich, die erste Stelleinrichtung 37 zu aktivieren. Hier ist ein ständiges Festhalten nicht notwendig, wenn eine bestimmte Geschwindigkeit aufrechterhalten werden soll.

Ein Fahrer kann also entscheiden, ob er je nach Aktivierung der ersten Stelleinrichtung 37 oder der zweiten Stelleinrichtung 50 eine konstante Geschwindigkeit mit der Hand einstellt oder über das Fahrpedal 34 einstellt.

Dadurch kann ein Fahrer, der an andere Fahrzeuge wie Mäher gewohnt ist, bei denen üblicherweise während eines Mäh-Modus ein Fahrpedal festgehalten werden muß, seine gewohnten Fahrbedingungen auch für da erfindungsgemäße Fahrzeug mit Hydromotor im Arbeits-Modus P4 einstellen.

Es ist noch vorgesehen, daß die zweite Stelleinrichtung 50 an die Steuerung 46 für eine Grenzlastregelung gekoppelt ist. Wenn die Stellung des Fahrpedals 34 so ist, daß das Fördervolumen der Hydraulikpumpe 22 bzw. 24 unter dem Knickpunkt liegt, dann wird die zweite Stelleinrichtung 50 deaktiviert, da ungeeignete Bedingungen für den Arbeits-Modus vorliegen.

Es kann vorgesehen sein, daß für die Grenzlastregelung, welche über die Steuerung 46 realisiert ist, eine Lernkurve aufgezeichnet und abgespeichert wird, bei der die Mindest-Solldrehzahl des Verbrennungsmotors 20 herangezogen wird. Sobald dann die tatsächliche Motordrehzahl des Verbrennungsmotors 20 unter die Mindest-Solldrehzahl gedrückt wird, wird das Fördervolumen der Pumpe verringert, um den Verbrennungsmotor 20 zu entlasten.

Es kann noch eine Sperrvorrichtung 54 mit Schalter 55 vorgesehen sein, über welche Räder 16 der Vorderachse 12 bzw. Räder 18 der Hinterachse 14 miteinander koppelbar sind, um diese mit gleicher Drehzahl anzutreiben. Bei geöffneter Sperrvorrichtung sind die Räder 16 bzw. 18 mit beliebigen Drehzahlunterschieden antreibbar, wobei ein mechanisches Verbindungselement für die Kopplung sorgt.

Eine solche Sperrvorrichtung ist in der DE 195 39 043 A1 beschrieben, auf die ausdrücklich Bezug genommen wird.

Das Fahrpedal 34 ist mit einem das Potentiometer 48 betätigendem Element mechanisch verbunden, beispielsweise über einen Bowdenzug 58. Diese mechanische Verbindung ist im Straßenfahrt-Modus P1 bzw. P2 wirksam, um entsprechend die Motordrehzahl steuern zu können.

## Patentansprüche

1. Fahrzeug, insbesondere Zugfahrzeug oder Fahrzeug mit Nebenabtrieb (26; 28), umfassend einen Verbrennungsmotor (20), mindestens eine von dem Verbrennungsmotor (20) angetriebene Hydraulikpumpe (22; 24) mit steuerbarem Fördervolumen, mindestens einen Hydromotor, welcher von der mindestens einen Hydraulikpumpe (22; 24) angetrieben ist, wobei ein Hydromotor ein oder mehrere Antriebselemente des Fahrzeugs antreibt, ein vom Fahrer betätigbares Fahrpedal (34) zur Einstellung der Drehzahl des Verbrennungsmotors (20) in einem Straßenfahrt-Modus (P1; P2) und eine vom Fahrer betätigbare erste Stelleinrichtung (36) zur Steuerung des Fördervolumens der Hydraulikpumpe (22; 24) in einem Arbeits-Modus (P3),
**dadurch gekennzeichnet, daß** eine zweite Stelleinrichtung (50) an das Fahrpedal (34) gekoppelt ist und über das Fahrpedal (34) betätigbar ist, und mit der im Arbeits-Modus (P4) das Fördervolumen der Hydraulikpumpe (22; 24) steuerbar ist.

2. Fahrzeug nach Anspruch 1, **dadurch gekennzeichnet, daß** ein Schalter (38) vorgesehen ist, mit dem vom Fahrer entweder die erste Stelleinrichtung (37) oder die zweite Stelleinrichtung (50) zur Steuerung des Fördervolumens der Hydraulikpumpe (22; 24) im Arbeits-Modus (P3; P4) aktivierbar ist.

3. Fahrzeug nach Anspruch 1 oder 2, **dadurch gekennzeichnet, daß** die erste Stelleinrichtung ein Potentiometer (37) umfaßt.

4. Fahrzeug nach einem der vorangehenden Ansprüche, **dadurch gekennzeichnet, daß** die zweite Stelleinrichtung ein über das Fahrpedal (34) betätigbares Potentiometer (51) umfaßt.

5. Fahrzeug nach einem der vorangehenden Ansprüche, **dadurch gekennzeichnet, daß** im Arbeits-Modus (P3; P4) das Fördervolumen der Hydraulikpumpe (22; 24) proportional zur Stellung der aktivierten Stelleinrichtung (37; 50) eingestellt ist.

6. Fahrzeug nach einem der vorangehenden Ansprüche, **dadurch gekennzeichnet, daß** im Straßenfahrt-Modus (P1, P2) das Fahrpedal (34) als Gaspedal für den Verbrennungsmotor (20) wirkt.

7. Fahrzeug nach einem der vorangehenden Ansprüche, **dadurch gekennzeichnet, daß** im Arbeits-Modus (P4) bei aktivierter zweiter Stelleinrichtung (50) das Fahrpedal (34) als Steuerpedal für das Fördervolumen der Hydraulikpumpe (22; 24) wirkt.

8. Fahrzeug nach einem der vorangehenden Ansprüche, **dadurch gekennzeichnet, daß** im Arbeits-Modus (P3; P4) eine Motordrehzahl des Verbrennungsmotors (20) fest eingestellt ist.

9. Fahrzeug nach einem der vorangehenden Ansprüche, **dadurch gekennzeichnet, daß** die zweite Stelleinrichtung (50) an eine Steuerung (26) gekoppelt ist, welche den oder die Antriebe des Fahrzeugs steuert und/oder regelt.

10. Fahrzeug nach Anspruch 9, **dadurch gekennzeichnet, daß** die zweite Stelleinrichtung (50) über eine Grenzlastregelung für den Verbrennungsmotor (20) deaktivierbar ist.

11. Fahrzeug nach Anspruch 9 oder 10, **dadurch gekennzeichnet, daß** bei einer Motordrehzahl des Verbrennungsmotors (20) unterhalb einer Anfahr-Solldrehzahl die zweite Stelleinrichtung (50) deaktiviert ist.

12. Fahrzeug nach einem der Ansprüche 9 bis 11, **dadurch gekennzeichnet, daß** bei Erreichen einer Stellung der zweiten Stelleinrichtung (50), welche einem Fördervolumen unterhalb eines Knickpunkts der Hydraulikpumpe (22; 24) entspricht, die zweite Stelleinrichtung (50) deaktiviert ist oder wird.

13. Fahrzeug nach einem der vorangehenden Ansprüche, **dadurch gekennzeichnet, daß** im Straßenfahrt-Modus (P1; P2) die zweite Stelleinrichtung (50) deaktiviert ist.

14. Fahrzeug nach einem der vorangehenden Ansprüche, **dadurch gekennzeichnet, daß** im Straßenfahrt-Modus (P1; P2) die erste Stelleinrichtung (36) deaktiviert ist.

## Claims

1. Vehicle, in particular tractor vehicle or vehicle with power take-off (26; 28), comprising a combustion engine (20), at least one controllable delivery volume hydraulic pump (22; 24) driven by the combustion engine (20), at least one hydraulic motor driven by the at least one hydraulic pump (22; 24), wherein a hydraulic motor drives one or more drive elements of the vehicle, a driver-actuatable drive pedal (34) for adjusting the rotational speed of the combustion engine (20) in a road travel mode (P1; P2), and a driver-actuatable first positioning device (36) for controlling the delivery volume of the hydraulic pump (22; 24) in a work mode (P3),
**characterized in that** a second positioning device (50) is coupled to and actuatable via the drive pedal (34) and is operable to control the delivery volume of the hydraulic pump (22; 24) in work mode (P4).

2. Vehicle in accordance with claim 1, **characterized in that** a switch (38) is provided which is operable by the driver to activate either the first positioning device (37) or the second positioning device (50) for controlling the delivery volume of the hydraulic pump (22; 24) in work mode (P3; P4).

3. Vehicle in accordance with claim 1 or 2, **characterized in that** the first positioning device (37) comprises a potentiometer (37).

4. Vehicle in accordance with any one of the preceding claims, **characterized in that** the second positioning device comprises a potentiometer (51) that is actuatable via the drive pedal (34).

5. Vehicle in accordance with any one of the preceding claims, **characterized in that** in work mode (P3; P4) the delivery volume of the hydraulic pump (22; 24) is adjusted to be proportional to the position of the activated positioning device (37; 50).

6. Vehicle in accordance with any one of the preceding claims, **characterized in that** in road travel mode (P1; P2) the drive pedal (34) acts as a gas pedal for the combustion engine (20).

7. Vehicle in accordance with any one of the preceding claims, **characterized in that** in work mode (P4) with the second positioning device (50) activated, the drive pedal (34) acts as a control pedal for the delivery volume of the hydraulic pump (22; 24).

8. Vehicle in accordance with any one of the preceding claims, **characterized in that** in work mode (P3; P4) an engine rotational speed of the combustion engine (20) is adjusted so as to be fixed.

9. Vehicle in accordance with any one of the preceding claims, **characterized in that** the second positioning device (50) is coupled to a control device (26) which controls the drive(s) of the vehicle.

10. Vehicle in accordance with claim 9, **characterized in that** the second positioning device (50) is deactivateable via limit load control for the combustion engine (20).

11. Vehicle in accordance with claim 9 or 10, **characterized in that** the second positioning device (50) is deactivated at an engine rotational speed of the combustion engine (20) below a target starting rotational speed.

12. Vehicle in accordance with claim 9 to 11, **characterized in that** the second positioning device (50) is or is being deactivated when a position of the second positioning device (50) corresponding to a delivery volume below a kink point of the hydraulic pump (22; 24) is reached.

13. Vehicle in accordance with any of the preceding claims, **characterized in that** in road travel mode (P1; P2) the second positioning device (50) is deactivated.

14. Vehicle in accordance with any of the preceding claims, **characterized in that** in road travel mode (P1; P2) the first positioning device (36) is deactivated.

## Revendications

1. Véhicule, en particulier véhicule tracteur ou véhicule à commande auxiliare (26 ; 28), comprenant un moteur à combustion (20), au moins une pompe hydraulique (22 ; 24) à cylindrée réglable entraînée par le moteur à combustion (20), au moins un moteur hydraulique entraîné par la ou les pompes hydrauliques (22 ; 24), un moteur hydraulique entraînant un ou plusieurs éléments de transmission du véhicule, une pédale d'accélérateur (34) actionnable par le conducteur pour le réglage de la vitesse de rotation du moteur à combustion (20) en mode de circulation routière (P1 ; P2) et un premier dispositif de réglage (36) actionnable par le conducteur pour le réglage de la cylindrée de la pompe hydraulique (22 ; 24) en mode de travail (P3), **caractérisé en ce qu'**un deuxième dispositif de réglage (50) est couplé à la pédale d'accélérateur (34) et actionnable au moyen de la pédale d'accélérateur (34), au moyen duquel la cylindrée de la pompe hydraulique (22 ; 24) est réglable en mode de travail (P4).

2. Véhicule selon la revendication 1, **caractérisé en ce qu'**un commutateur (38) est prévu, au moyen duquel le conducteur peut activer soit le premier dispositif de réglage (37), soit le deuxième dispositif de réglage (50) pour commander la cylindrée de la pompe hydraulique (22 ; 24) en mode de travail (P3 ; P4).

3. Véhicule selon la revendication 1 ou la revendication 2, **caractérisé en ce que** le premier dispositif de réglage comprend un potentiomètre (37).

4. Véhicule selon l'une des revendications précédentes, **caractérisé en ce que** le deuxième dispositif de réglage comprend un potentiomètre (51) actionnable au moyen de la pédale d'accélérateur (34).

5. Véhicule selon l'une des revendications précédentes, **caractérisé en ce qu'**en mode de travail (P3 ; P4), la cylindrée de la pompe hydraulique (22 ; 24) est commandée de manière proportionnelle à la position du dispositif de réglage (37 ; 50) activé.

6. Véhicule selon l'une des revendications précédentes, **caractérisé en ce qu'**en mode de circulation routière (P1, P2), la pédale d'accélérateur (34) fonctionne comme commande des gaz pour le moteur à combustion (20).

7. Véhicule selon l'une des revendications précédentes, **caractérisé en ce qu'**en mode de travail (P4), le deuxième dispositif de réglage (50) étant activé, la pédale d'accélérateur (34) fonctionne comme pédale de commande pour la cylindrée de la pompe hydraulique (22 ; 24).

8. Véhicule selon l'une des revendications précédentes, **caractérisé en ce qu'**en mode de travail (P3 ; P4), une vitesse de rotation du moteur à combustion (20) est réglée de manière fixe.

9. Véhicule selon l'une des revendications précédentes, **caractérisé en ce que** le deuxième dispositif de réglage (50) est couplé à une commande (26), laquelle commande et/ou régule le ou les transmissions du véhicule.

10. Véhicule selon la revendication 9, **caractérisé en ce que** le deuxième dispositif de réglage (50) peut être désactivé au moyen d'une régulation de charge limite pour le moteur à combustion (20).

11. Véhicule selon la revendication 9 ou 10, **caractérisé en ce que** le deuxième dispositif de réglage (50) est désactivé en cas de vitesse de rotation du moteur à combustion (20) inférieure à une vitesse de démarrage de consigne.

12. Véhicule selon l'une des revendications 9 à 11, **caractérisé en ce que** le deuxième dispositif de réglage (50) est désactivé ou sera désactivé une fois atteinte une position du deuxième dispositif de réglage (50) correspondant à une cylindrée inférieure à un point d'inflexion de la pompe hydraulique (22 ; 24).

13. Véhicule selon l'une des revendications précédentes, **caractérisé en ce que** le deuxième dispositif de réglage (50) est désactivé en mode de circulation routière (P1 ; P2).

14. Véhicule selon l'une des revendications précédentes, **caractérisé en ce que** le premier dispositif de réglage (36) est désactivé en mode de circulation routière (P1 ; P2).
